# FASCICULE DE BREVET EUROPEEN

(11) **EP 0 505 541 B1**
(45) Date de publication et mention de la délivrance du brevet: **05.06.1996**
(21) Numéro de dépôt: 91918137.0
(22) Date de dépôt: 10.10.1991
(51) Int. Cl.: G05B 19/05

(54) **CIRCUIT DE GESTION DE SORTIES POUR AUTOMATE PROGRAMMABLE**
AUSGABEVERWALTUNGSKREIS FÜR SPEICHERPROGRAMMIERBARE STEUERUNG
OUTPUT CONTROL CIRCUIT FOR A PROGRAMMABLE LOGIC CONTROLLER

(30) Priorité: 11.10.1990 FR 9012542
(43) Date de publication de la demande: 30.09.1992
(73) Titulaire: AEG SCHNEIDER AUTOMATION, F-75016 Paris (FR)
(72) Inventeur: GOHL, Pierre, F-06480 La Colle-sur-Loup (FR); GOMEZ, Gérard, F-06510 Carros (FR); PERGENT, Jacky Rue de la Vésubie, F-06510 Carros-le-Neuf (FR); WOJERZ, Daniel, F-06600 Antibes (FR)
(74) Mandataire: Carias, Alain
(86) Numéro de dépôt international: FR9100789
(87) Numéro de publication internationale: WO9207312

(56) Documents cités:
- EP-A- 0 166 402
- EP-A- 0 318 587
- EP-A- 0 374 293
- FR-A- 2 607 274
- US-A- 4 170 791
- US-A- 4 254 473

## Description

La présente invention concerne un circuit de gestion de sorties adapté à un système de commande programmable, notamment à un automate programmable ou appareil analogue.

Le brevet FR-2 607 274 décrit un circuit de gestion d'entrées-sorties pour automate programmable, comprenant une unité de gestion d'entrées-sorties reliée à une unité de traitement apte à déterminer l'état de voies de sortie à partir de l'état de voies d'entrée en fonction d'un programme préétabli, et un circuit de sortie qui comprend un organe désérialiseur présentant, d'une part, une entrée série reliée à une sortie série de l'unité de gestion et, d'autre part, des sorties parallèles reliées via un étage de puissance aux voies respectives de sortie, le circuit de sortie comprenant de plus une logique de commande et de contrôle.

Un circuit de ce type a également été décrit dans les brevets EP-0 318 587 et US-4 254 473.

Le circuit de sortie ne bénéficie pas, selon cet art antérieur, de la simplification et du gain de place procurés par la sérialisation de données d'entrée. De plus, il serait très souhaitable de prendre des dispositions pour renvoyer à l'unité de gestion des informations relatives à l'état des voies de sortie, notamment pour établir si l'une des voies est coupée ou en court-circuit, ou des informations relatives à l'absence de tension au niveau des préactionneurs ou du circuit lui-même.

L'invention a notamment pour but de simplifier, dans un système de commande programmable, l'acheminement vers les voies de sortie des données appropriées et le renvoi vers l'unité de gestion de signaux de défaut de courant et/ou de tension affectant les lignes de sortie, et à maintenir des échanges fiables.

Elle a pour autre but de faire dialoguer, via deux liaisons série montante et descendante, une unité de gestion de sorties, ou le cas échéant de gestion d'entrées-sorties, et un circuit de sortie, et ce au moyen de trames de préférence à format uniforme.

Elle a encore pour but de conférer à un circuit local ou distant de gestion de sorties une grande souplesse d'emploi en le configurant de façon très simple pour qu'il puisse être mis en oeuvre dans plusieurs modes de fonctionnement différents, notamment un mode dit "sortie" et un mode dit "entrée", ou pour qu'il soit utilisable aussi bien dans des applications logiques que dans des applications analogiques.

Elle a pour autre but de créer un circuit de gestion de sorties qui se prête bien à la réalisation sous forme de circuit intégré.

A cet effet, elle propose un circuit local ou distant de gestion de sorties pour système de commande programmable, notamment pour un automate programmable, comprenant :
- une unité de gestion de sorties, et le cas échéant d'entrées, reliée à une unité de traitement apte à déterminer l'état de voies de sortie à partir de l'état de voies d'entrée en fonction d'un programme préétabli, et
- un circuit de sortie qui comprend un organe désérialiseur présentant, d'une part, une entrée série relié à une sortie série de l'unité de gestion et, d'autre part, des sorties parallèles reliées via un étage de puissance aux voies respectives de sortie, le circuit de sortie comprenant de plus une logique de commande et de contrôle.

Ce circuit de gestion est caractérisé en ce que le circuit de sortie :
- reçoit de l'unité de gestion de sorties sur une première entrée série, une trame descendante composée de bits de données et d'au moins un bit de contrôle, et transmet les bits de données aux sorties parallèles,
- reçoit sur une deuxième entrée série, une trame montante d'entrée composée d'une succession de bits comprenant au moins un bit de contrôle, et des bits de données significatifs de défauts électriques concernant l'ensemble des entrées et/ou sorties, cette trame montante étant élaborée dans un circuit distinct du circuit de sortie, et
- présente au moins une sortie série de retour reliée par une liaison série à l'unité de gestion de sorties, la logique étant conçue pour élaborer à partir de la trame montante, une trame montante de sortie incluant au moins un bit de défaut électrique, et acheminer cette trame vers la sortie série de retour.

Les trames retournées à l'unité de gestion peuvent ainsi comprendre des bits significatifs de l'état ouvert ou en court-circuit d'une ou plusieurs lignes d'entrée et/ou de sortie.

Selon un autre mode d'exécution de l'invention, le circuit de sortie :
- reçoit sur une deuxième entrée, un signal représentatif de la tension des préactionneurs reliés aux voies de sortie, et
- présente au moins une sortie série de retour reliée par une liaison série à l'unité de gestion de sorties, la logique étant conçue pour élaborer à partir de la trame descendante et dudit signal, une trame montante de sortie incluant au moins un bit de défaut électrique, et acheminer cette trame vers la sortie série de retour.

Les trames retournées à l'unité de gestion peuvent ainsi comprendre des bits significatifs de l'absence de tension d'alimentation des préactionneurs.

Les trames montantes d'entrée et de sortie ont de préférence un format identique à celui des trames descendantes.

Des moyens de configuration peuvent être avantageusement associés au circuit de sortie, et particulièrement à sa logique de commande, pour assurer une transmission sélective vers la sortie de retour de trames montantes de sortie élaborées soit à partir de la trame descendante, soit à partir de la trame montante d'entrée, soit à partir des deux à la fois. De même, des moyens de configuration d'application logique-analogique peuvent être prévus pour configurer sélectivement des broches de sortie du circuit de sortie soit en voies de sortie de données parallèles, soit en connexions de commande propres à une application analogique.

L'unité de gestion de sorties peut être reliée au circuit de sortie par deux lignes série respectivement montante et descendante et deux lignes de signaux d'horloge, ces lignes étant munies de moyens d'isolement tels que des optocoupleurs. Les constituants du circuit de gestion de sorties sont ainsi particulièrement peu encombrants et peu nombreux, en particulier pour ce qui concerne les moyens d'isolement, ce qui permet d'augmenter la fiabilité du circuit de gestion de sortie.

Les particularités et avantages de l'invention seront mieux compris à la lecture de la description ci-dessous et à l'examen des figures annexées, relatifs à un exemple de réalisation non limitatif.
La figure 1 est le schéma synoptique d'un circuit de gestion de sorties conforme à l'invention.
La figure 2 représente plus en détail une partie du circuit de gestion de la figure 1.
Les figures 3 à 5 montrent schématiquement le circuit de sortie du circuit de gestion de la figure 1, respectivement configuré en mode sortie, en mode entrée et en mode mixte sortie-entrée.
Les figures 6 à 8 sont des tableaux illustrant la composition des trames descendante, montante d'entrée et montante de sortie dans les diverses configurations du circuit.
La figure 9 est un élément de tableau complétant celui de la figure 6 dans une application analogique.
Les figures 10 et 11 montrent les voies de sortie du circuit respectivement dans une application logique et dans une application analogique.
La figure 12 illustre la gestion des défauts affectant les échanges descendants.

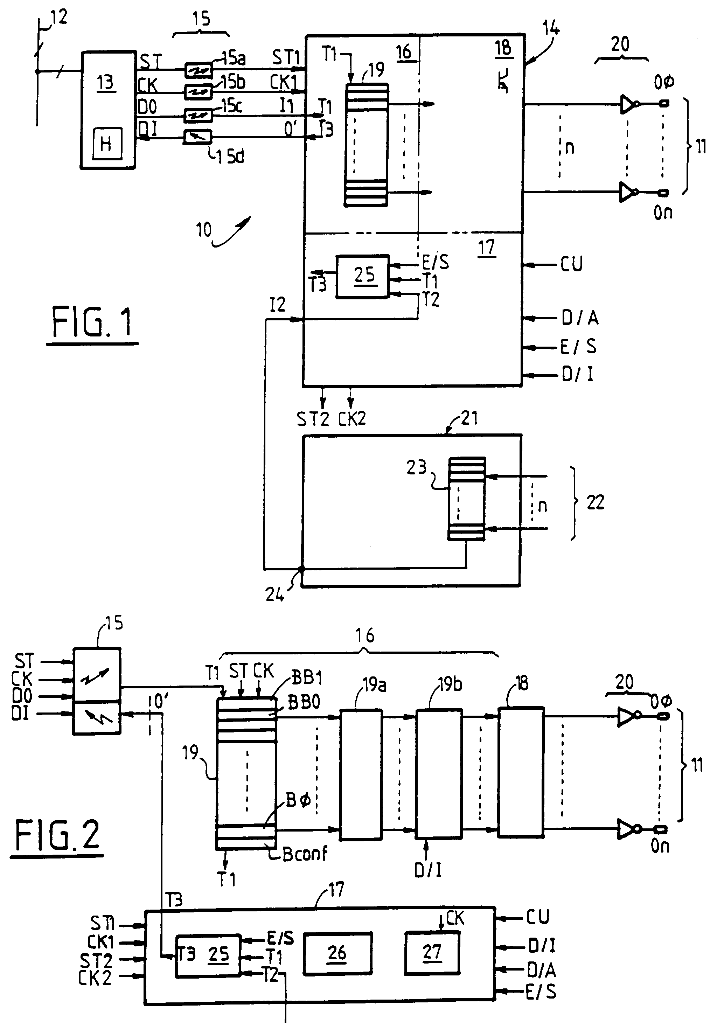

Le circuit 10 de gestion de sortie illustré sur la figure 1 fait partie d'un système de commande d'automatismes, par exemple d'un automate programmable. Il est inclus, soit dans l'automate si celui-ci est monobloc, soit dans un module de sorties ou un module mixte d'entrées-sorties, local ou distant si l'automate est composé de tels modules. Le circuit 10 a pour rôle de commander et contrôler un certain nombre de voies de sortie 11 à partir des informations fournies à un bus ou réseau 12, électrique ou optique, par une ou plusieurs unités de traitement non représentées.

Le circuit 10 comprend, d'une part, une unité 13 de gestion de sorties - également utilisable pour gérer des entrées - et, d'autre part, un circuit 14 de commande et de contrôle des voies de sortie, ci-après désigné brièvement circuit de sortie. L'unité 13 est reliée au bus 12 par des conducteurs de données et de service et au circuit 14 par des conducteurs décrits plus loin via un interface d'isolement 15.

Le circuit de sortie 14 comprend notamment un organe désérialiseur 16, auquel est associée une logique 17 de commande et contrôle, et un étage de préamplification 18 dont les sorties parallèles OO-On constituent les voies de sortie 11 sur lesquelles peuvent être intercalés des amplificateurs 20.

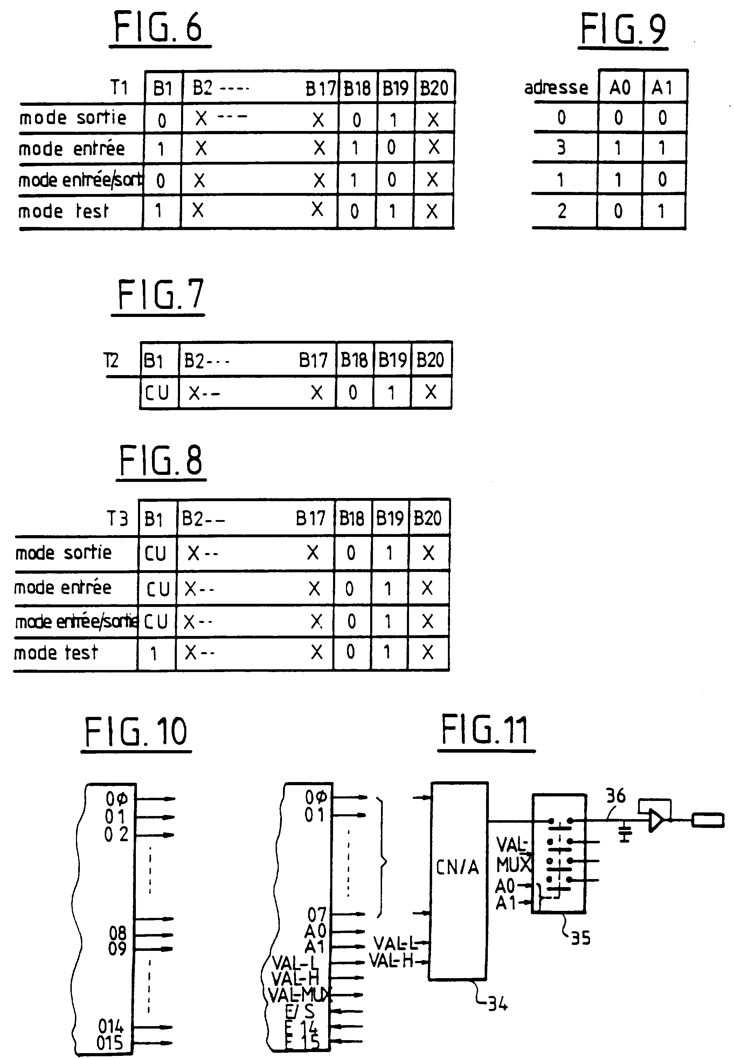

On remarquera que l'unité 13 de gestion des sorties possède un système d'horloge H qui délivre sur une sortie ST un signal de trame et sur une sortie CK un signal d'horloge cadençant respectivement, comme on le verra plus loin, les trames à acheminer et les bits composant ces trames, aussi bien dans le sens descendant, c'est-à-dire de l'unité 13 vers le circuit 14, que dans le sens montant, c'est-à-dire du circuit 14 vers l'unité 13. Les trames se composent de bits de données et de bits de contrôle et, le cas échéant, de configurations ; leur composition exacte sera décrite en regard des figures 6 à 8, mais -on peut dés à présent noter que les trames descendantes et les trames montantes ont un format identique et un nombre identique de bits de données.

Les trames descendantes T1 à acheminer sont délivrées à une sortie DO de l'unité 13 et transmises de là à une entrée série du circuit 14 ; une entrée DI de l'unité 13 reçoit les trames montantes T3 issues du circuit 14. Les sorties ST, CK et DO de l'unité de gestion 13 sont reliées à des entrées ST1, CK1 et I1 du circuit de sortie 14 via des conducteurs munis d'optocoupleurs respectifs 15a, 15b, 15c de l'interface 15.

De plus, pour acheminer les trames T3, une sortie série O' du circuit 14 est reliée à l'entrée DI de l'unité 13 via un conducteur muni d'un optocoupleur 15d de l'interface 15.

Les trames descendantes T1 sont désérialisées par un registre 19 de l'organe désérialiseur 16 ; les sorties parallèles du registre 19 sont appliquées (figure 2) à un registre tampon 19a activable par un signal fourni par la logique 17 et lui-même relié à une logique de choix de phase 19b, qui permet aux signaux de sortie d'être en logique positive ou négative en fonction d'un signal D/I. Les sorties parallèles de la logique 19b sont reliées aux entrées de l'étage de préamplification 18 visible sur les figures 1 et 2. Les n voies 11 comprennent des amplificateurs 20 qui peuvent être ou non protégés.

Des signaux logiques D/A de sélection d'application logique ou analogique, E/S de sélection du mode de fonctionnement en entrée et/ou sortie, D/I de sélection de sorties directes ou inverses sont applicables à la logique 17. De plus, un signal logique CU de contrôle affecté, soit au contrôle externe de tension des préactionneurs, soit au contrôle interne de tension du module comprenant le circuit 14, est applicable à la logique 17. Les signaux D/A, E/S, D/I et CU sont traités par des blocs appropriés de la logique 17. Des tensions d'alimentation convenables V_{DD}, V_{SS} sont fournies au circuit 14.

Les trames montantes d'entrée T2 sont générées par un organe sérialiseur 21 à partir de données acheminées vers celui-ci par des conducteurs parallèles 22 en nombre par exemple égal à n. L'organe sérialiseur comprend un registre parallèle-série 23 relié aux conducteurs 22 et présentant une sortie série 24 reliée à une deuxième entrée série I2 du circuit 14. Selon les cas, les conducteurs 22 sont eux-mêmes raccordés à des voies d'entrée, et à des voies de sortie 11 où il leur est appliqué d'autres signaux.

La logique 17 comporte un organe 25 qui reçoit la trame T1, la trame T2 ainsi que le signal E/S pour délivrer une trame montante de sortie T3 à la sortie série O' du circuit 14, cette trame T3 reprenant les bits de la trame T1 et/ou de la trame T2 en fonction de la configuration communiquée au circuit 14 lors de la réception de la trame T1 précédente.

Chaque trame T1-T3 comprend un bit de parité. A la réception de chaque trame, un élément de contrôle de parité 26 prévu dans la logique 17 recalcule la parité correspondante et, en cas de discordance, délivre un signal qui est notamment répercuté sur l'unité de gestion 13 via la trame T3. Chaque trame T1-T3 comprend de plus deux bits de configuration et de contrôle d'échange qui sont complémentaires et dont la complémentarité est vérifiée par le circuit 14 (T1, T2) et par l'unité 13 (T3).

Le circuit de sortie 14 comprend en outre un chien de garde 27 qui surveille l'activité du signal d'horloge CK et, en cas de défaut, force à 1 la sortie de retour 0' et désactive les sorties O0-On. De plus, le circuit 14 comprend des connexions ST2, CK2 qui peuvent être reliées à un autre circuit pour transmettre ou recevoir les signaux ST et CK.

Le circuit de sortie 14 est configurable de manière à prendre quatre modes de fonctionnement : sortie, entrée, mixte entrée-sortie et test, qui seront décrits par la suite. La logique comprend à cet effet des moyens logiques de configuration mis en oeuvre soit par un ou plusieurs bits de configuration contenus dans une trame descendante, soit par le signal E/S précédemment mentionné. Le circuit de sortie 14 est d'autre part configurable pour son application logique ou analogique par le signal D/A, comme on le verra plus loin.

Les trames T1, T2, T3 ont le même format et comprennent 20 bits : un bit B1 de configuration (T1) ou de contrôle (T2, T3), 16 bits B2-B17 de données correspondant à 16 voies qui selon les cas sont des voies de sortie, des voies de sortie et d'entrée, voire même des voies d'entrée, deux bits B18, B19 de configuration (T1) ou de contrôle d'échange et un bit B20 de parité. Cela signifie qu'on rencontre 19 signaux CK entre deux signaux ST.

La trame descendante T1 (voir figure 6) comprend deux bits B1, B18 qui configurent avec les valeurs respectives 0,0 le mode entrée, 1,1 le mode sortie, 0,1 le mode entrée-sortie et 1,0 le mode test. Le bit B19 est toujours normalement complémentaire du bit B18 et la logique 17 présente des moyens de vérifier cette complémentarité. Le bit de parité B20 de la trame T1 est comparé à un bit de parité PAR T1 recalculé à partir de B1 à B19 par l'élément 26 de la logique 17. Si un défaut est constaté dans la complémentarité de B18,B19, dans la parité ou dans la persistance du signal CK, les données de la trame T1 ne sont pas chargées dans le registre 19a, la sortie de retour 0' reste forcée à 1 pendant la trame suivante et un compteur de défauts interne au circuit 14 est incrémenté.

La trame montante d'entrée T2 (voir figure 7) comprend un bit B1 de contrôle de tension, 16 bits de données B2-B17, deux bits complémentaires de contrôle d'échange B18,B19 et un bit de parité B20. Ce dernier est comparé à un bit de parité PAR T2 recalculé à partir des bits B2-B17 reçus de T2 par l'élément 26 ; s'il y a discordance, le bit PAR T2 est inversé et incorporé à T3 en position B20.

La trame montante de sortie T3 (voir figure 8) comprend un bit B1 de contrôle de tension, 16 bits de données B2-B17, deux bits complémentaires de contrôle d'échange B18-B19 et un bit de parité B20. Celui-ci est cohérent avec B1 à B19 ou inversé dans l'hypothèse des défauts mentionnés plus hauts. Le bit de contrôle de tension est forcé à 1 en mode test.

Les bits de données B2-B17 de la trame T3 sont ceux de la trame T1 - retournés à l'unité de gestion 13 - en mode sortie, ceux de la trame T2 - correspondant soit à des données de voies d'entrée, soit à des données de contrôle de ligne des voies de sortie - en mode entrée, ou ceux d'un OU logique de la trame T1 et de la trame T2 en mode mixte entrée-sortie.

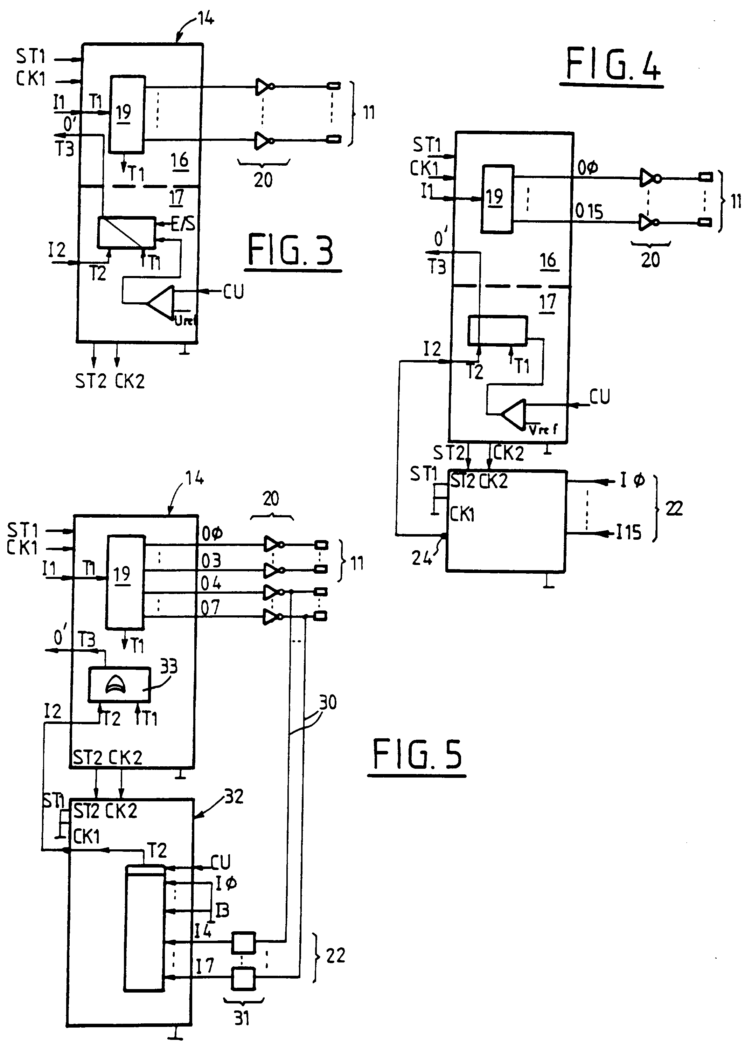

Le mode sortie du circuit 14 (voir figures 3 et 6) est configuré en application logique (ou "tout ou rien") par le niveau B1 = 0, B18 = 0, B19 = 1 des bits de configuration de la trame descendante T1. Le glissement des bits de la trame T1 dans le registre 19 du circuit de sortie 14 s'effectue sous la commande du signal CK et le transfert de la trame T1 vers le registre 19a est déclenché par le signal ST.

La trame montante de sortie T3 a un bit de contrôle de tension interne ou externe au module qui est substitué au bit de configuration B1 = 0 de la trame descendante précédente T1. Les bits B2-B17 de T3 sont identiques à ceux de la trame précédente T1 et peuvent être exploités par l'unité de gestion 13, par exemple pour gérer un organe de visualisation. Les bits B18 et B19 sont positionnés à 0 et 1, ou à 0 et 0 si la trame T1 reçue s'est révélée défectueuse et le bit de parité est inversé en cas de défaut de parité. Il convient d'observer qu'en application analogique le mode sortie est configuré par le signal E/S.

Le mode de fonctionnement en "entrée" du circuit 14 (voir figures 4 et 7) est configuré en application logique par le niveau Bl = 1, B18 = 1, B19 = 0 des bits de configuration de la trame T1, dont les données sont comme précédemment transmises aux voies parallèles 11 de sortie. L'entrée I2 du circuit 14 reçoit la trame T2 décrite plus haut. En application analogique, le mode entrée est configuré par le signal E/S.

On remarque que les données d'entrée Iφ-I15 disponibles sur les voies parallèles 22 sont des signaux logiques représentatifs, soit de l'état d'au moins une voie analogique d'entrée ou de plusieurs voies logiques d'entrée, soit de l'état de ligne - ouvert ou en court-circuit - de chacune des voies de sortie dont l'état a été déterminé par la trame descendante précédente T1.

Le mode de fonctionnement en "entrée-sortie" du circuit 14 (voir figures 5 et 8) est configuré dans la seule application logique par le niveau B1 = 0, B18 = 1, B19 = 0 des bits de configuration de la trame T1 dont les bits de données B2-B17 sont ici encore transmis aux voies de sortie 11. Dans le mode de réalisation illustré par la figure 5, il est prévu 4 voies de sortie 00-03 et 4 voies 04-07 configurables en sorties ou en entrées. On suppose que ces quatre dernières voies sont configurées en entrées et que les connexions de sortie sont donc reliées par des -conducteurs 30 et des organes de filtrage et de seuil 31 à des entrées I4-I7 d'un circuit sérialiseur d'entrées 32.

Ce circuit sérialiseur est avantageusement du type décrit dans le brevet FR-2 607 274 dont les entrées Iφ-I3 sont mises au potentiel zéro. De la sorte, la trame T2 issue du circuit d'entrée 32 peut comporter comme bit B1, un bit CU de contrôle de tension, notamment représentatif de la tension des capteurs reliés aux voies d'entrée. Les bits B1, B18, B19 de T2 sont transposés dans la trame T3 sans être modifiés, tandis que les bits B2 à B17 de T2 sont combinés dans un organe 33 de la logique 17 en OU logique, bit à bit avec ceux de la trame T1 précédente.

Il convient de remarquer que les connexions ST2, CK2 du circuit 14 sont reliées à des connexions ST2, CK2 du circuit 32 pour lui transmettre les signaux ST, CK.

On a par ailleurs représenté sur la figure 9 un complément du tableau de la figure 6 montrant la signification des bits B18, B19 dans une application analogique et mode sortie du circuit 14 : ceux-ci codent quatre adresses différentes permettant une sortie sur quatre voies analogiques.

Il est particulièrement intéressant que le circuit 14 soit réalisé sous forme de circuit intégré.

La figure 10 montre un exemple de topologie des broches de sortie d'un circuit intégré 14 à 16 sorties logiques 00-015. La figure 11 montre le même circuit dans lequel 8 sorties 00-07 sont reliées aux entrées de données d'un convertisseur numérique-analogique 34 dont la sortie analogique est appliquée à un organe démultiplexeur 35 capable, au moyen de deux bits d'adresse A0, A1, de transmettre la grandeur analogique à quatre voies analogiques 36. Au convertisseur N/A 34 sont appliqués des signaux VAL-L, VAL-H permettant d'obtenir des sorties jusqu'à 16 bits de résolution et à l'organe démultiplexeur 35 est appliqué un signal VAL-MUX. Les signaux d'adresse A0, A1 et les signaux de service VAL-L, VAL-H et VAL-MUX sont délivrés par le circuit 14 sur des broches de sortie 08-012 qui étaient consacrées en mode logique à la sortie de données.

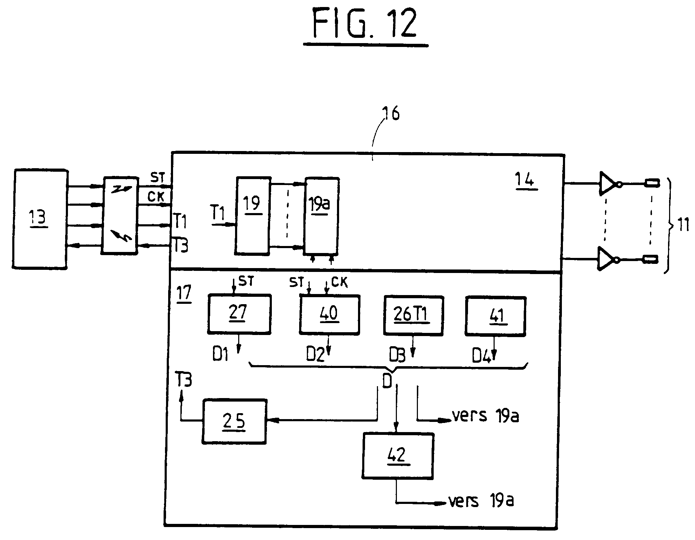

La figure 12 montre la gestion des défauts d'échange, effectuée par la logique 17. Comme déjà expliqué en regard de la figure 2, la logique 17 comprend un élément 26 de contrôle de parité et un chien de garde 27, ce dernier contrôlant l'activation du signal CK. Elle comprend de plus un compteur 40 qui détermine si deux signaux ST consécutifs sont bien séparés par 19 signaux CK, et un organe 41 qui vérifie la complémentarité de B18 et B19. On ne considérera ici que la partie 26 T1 de l'élément 26 qui vérifie la parité de la trame descendante T1.

Chaque organe 26, 27, 40, 41 est agencé pour émettre un signal respectif D1, D2, D3, D4 lorsqu'il constate un défaut d'échange descendant. La logique 17 fait le OU logique de ces signaux pour générer un signal de défaut D transmis à l'organe 25 qui élabore la trame T3 et à l'un des registres parallèles du circuit de sortie 14, par exemple à une entrée de validation du registre 19a ; le signal D est de plus transmis à un compteur de défauts 42. Lorsque D est activé, l'organe 25 modifie la trame T3 en la mettant par exemple à zéro, de façon à avertir l'unité 13, tandis que le transfert du contenu du registre 19 au registre 19a est inhibé ; l'état des sorties 11 n'est donc pas modifié. Le compteur 42 est incrémenté et, si le signal D reste activé pendant la réception de plusieurs trames T1 consécutives, par exemple au nombre de quatre, sa sortie est activée et met à zéro les voies 11 via le registre 19a ou un autre organe de circuit de sortie 14.

Il va de soi qu'on peut apporter des modifications au mode de réalisation décrit sans sortir du cadre de l'invention. Ainsi, certaines broches du circuit intégré peuvent être dupliquées. Par exemple, une même broche peut servir à l'entrée du signal CU et du signal E/S. D'autre part, dans une application analogique monovoie, on n'utilisera que deux bits de chaque trame T2 et T3 pour retourner l'information "circuit ouvert" et "court-circuit".

## Revendications

1. Circuit local ou distant de gestion de sorties pour système de commande programmable, notamment pour un automate programmable, comprenant :
- une unité (13) de gestion de sorties, et le cas échéant d'entrées, reliée à une unité de traitement apte à déterminer l'état de voies de sortie (11) à partir de l'état de voies d'entrée en fonction d'un programme préétabli, et
- un circuit de sortie (14) qui comprend un organe désérialiseur (16) présentant, d'une part, une entrée série relié à une sortie série de l'unité de gestion et, d'autre part, des sorties parallèles reliées via un étage de puissance (18) aux voies respectives de sortie, le circuit de sortie (14) comprenant de plus une logique (17) de commande et de contrôle,
caractérisé par le fait que le circuit de sortie (14)
- reçoit de l'unité de gestion de sorties (13) sur une première entrée série (I1), une trame descendante (T1) composée de bits de données et d'au moins un bit de contrôle, et transmet les bits de données aux sorties parallèles,
- reçoit sur une deuxième entrée série (I2), une trame montante d'entrée (T2) composée d'une succession de bits comprenant au moins un bit de contrôle, et des bits de données significatifs de défauts électriques concernant l'ensemble des entrées et/ou sorties, cette trame montante (T2) étant élaborée dans un circuit (21,32) distinct du circuit de sortie (14), et
- présente au moins une sortie série de retour (O') reliée par une liaison série à l'unité de gestion de sorties (13), la logique (17) étant conçue pour élaborer à partir de la trame montante (T2), une trame montante de sortie (T3) incluant au moins un bit de défaut électrique, et acheminer cette trame vers la sortie série de retour (0').

2. Circuit selon la revendication 1, caractérisé par le fait que la trame montante de sortie (T3) est de format identique à la trame descendante (T1).

3. Circuit selon la revendication 1 ou 2, caractérisé par le fait que la trame montante d'entrée (T2) est de format identique à la trame descendante (T1).

4. Circuit selon l'une des revendications 1 à 3, caractérisé par le fait qu'au circuit de sortie (14) sont associés des moyens de configuration (B1, B18, B19 ; E/S) du mode de fonctionnement dudit circuit, et que ces moyens coopèrent avec la logique (17) pour assurer la transmission sélective vers la sortie de retour (0') d'une trame montante de sortie (T3) qui est élaborée soit à partir de la trame montante d'entrée (T2), soit à partir de la trame montante d'entrée (T2) et de la trame descendante (T1).

5. Circuit selon l'une des revendications 1 à 3, caractérisé par le fait qu'au circuit de sortie (14) sont associés des moyens de configuration (B1, B18, B19 ; E/S) du mode de fonctionnement dudit circuit, et que ces moyens coopèrent avec la logique (17) pour assurer la transmission sélective vers la sortie de retour (0') d'une trame montante de sortie mixte (T3) élaborée à partir de la trame descendante (T1) et de la trame montante d'entrée (T2).

6. Circuit selon l'une des revendications 1 à 3, caractérisé par le fait qu'au circuit de sortie (14) sont associés des moyens de configuration (B1, B18, B19 ; E/S) du mode de fonctionnement dudit circuit, et que ces moyens coopèrent avec la logique (17) pour assurer la transmission sélective vers la sortie de retour (0') d'une trame montante de sortie (T3) reprenant les bits soit de la trame montante d'entrée (T2) seule, soit de la trame montante d'entrée (T2) et de la trame descendante (T1), en fonction de la configuration communiquée au circuit de sortie (14) lors de la réception de la trame descendante précédente.

7. Circuit selon l'une des revendications 1 à 6, caractérisé par le fait que la trame montante de sortie (T3) comprend un bit de contrôle de tension (CU).

8. Circuit selon l'une des revendications 4 à 7, caractérisé par le fait que les moyens de configuration comprennent un ou plusieurs bits (B1, B18, B19) de configuration, contenus dans la trame descendante (T1).

9. Circuit selon l'une des revendications 1 à 8, caractérisé par le fait qu'au circuit de sortie (14) sont associés des moyens de configuration (D/A) d'application logique-analogique, et que ces moyens coopèrent avec la logique (17) pour configurer sélectivement des broches (08-015) du circuit de sortie, soit en voies de sortie de données (11), soit en connexions de commande, propres à une application analogique.

10. Circuit selon l'une des revendications 1 à 9,
caractérisé par le fait que la deuxième entrée série (I2) du circuit de sortie (14) est reliée à une sortie série (24) d'un circuit d'entrée à organe sérialiseur (23) dont des entrées parallèles sont reliées à des voies d'entrée (22) et qui génère les trames montantes d'entrée (T2).

11. Circuit selon l'une des revendication 1 à 10,
caractérisé par le fait que l'unité de gestion d'entrées-sorties (13) élabore des signaux d'horloge (ST, CK) qui cadencent respectivement les trames descendantes (T1) et montantes (T2, T3) et les bits (B1-B20), composant ces trames.

12. Circuit selon la revendication 11, caractérisée par le fait que l'unité de gestion de sorties (13) est reliée au circuit de sortie (14) via deux lignes série respectivement descendante et montante et deux lignes de signaux d'horloge munies de moyens d'isolement (15).

13. Circuit selon l'une des revendications 1 à 12,
caractérisé par le fait que le circuit de sortie (14) comprend plusieurs organes (26, 27, 40, 41) de contrôle des échanges descendants, associés de manière à générer un signal de défaut (D) apte, d'une part, à inhiber le transfert des données de la trame défectueuse vers les voies de sortie et, d'autre part, transmis à un compteur (42) qui met à zéro les voies de sortie lorsque le signal de défaut persiste pendant plusieurs trames descendantes consécutives.

14. Circuit selon la revendication 13,
caractérisé par le fait que le signal de défaut (D) est transmis à un organe (25) élaborant la trame montante de sortie (T3) pour modifier celle-ci.

15. Circuit local ou distant de gestion de sorties pour système de commande programmable, notamment pour un automate programmable, comprenant :
- une unité (13) de gestion de sorties, et le cas échéant d'entrées, reliée à une unité de traitement apte à déterminer l'état de voies de sortie (11) à partir de l'état de voies d'entrée en fonction d'un programme préétabli, et
- un circuit de sortie (14) qui comprend un organe désérialiseur (16) présentant, d'une part, une entrée série relié à une sortie série de l'unité de gestion et, d'autre part, des sorties parallèles reliées via un étage de puissance (18) aux voies respectives de sortie, le circuit de sortie (14) comprenant de plus une logique (17) de commande et de contrôle,
caractérisé par le fait que le circuit de sortie (14)
- reçoit de l'unité de gestion de sorties (13) sur une première entrée série (I1), une trame descendante (T1) composée de bits de données et d'au moins un bit de contrôle, et transmet les bits de données aux sorties parallèles,
- reçoit sur une deuxième entrée, un signal (CU) représentatif de la tension d'alimentation des préactionneurs reliés aux voies de sortie, et
- présente au moins une sortie série de retour (0') reliée par une liaison série à l'unité de gestion de sorties (13), la logique (17) étant conçue pour élaborer à partir de la trame descendante (T1) et dudit signal (CU), une trame montante de sortie (T3) incluant au moins un bit de défaut électrique, et acheminer cette trame vers la sortie série de retour (0').

## Patentansprüche

1. Örtliche oder entfernte Ausgangs-Verwaltungsschaltung für ein programmierbares Steuersystem, insbesondere für einen programmierbaren Automaten, das aufweist:
- eine Ausgangs- und ggf. Eingangs-Verwaltungseinheit (13), die mit einer Verarbeitungseinheit verbunden ist, welche den Zustand von Ausgangskanälen (11) ausgehend vom Zustand von Eingangskanälen in Abhängigkeit von einem vorher erstellten Programm bestimmen kann, und
- eine Ausgangsschaltung (14), die einen Serien/Parallelwandler (16) aufweist, der einerseits einen Serieneingang, der mit einem Serienausgang der Verwaltungseinheit verbunden ist, und andererseits parallele Ausgänge aufweist, die über Leistungsstufen (18) mit den Ausgangskanälen verbunden sind, wobei die Ausgangsschaltung (14) außerdem eine Steuer- und Kontroll-Logik (17) enthält,
dadurch gekennzeichnet, daß die Ausgangsschaltung (14):
- von der Ausgangs-Verwaltungseinheit (13) an einem ersten Serieneingang (I1) einen absteigenden Rahmen (T1) bestehend aus Datenbits und mindestens einem Kontrollbit empfängt und die Datenbits an die parallelen Ausgänge überträgt,
- an einem zweiten Serieneingang (I2) einen aufsteigenden Eingangsrahmen (T2) empfängt, der aus einer Folge von Bits, die mindestens ein Kontrollbit enthalten, und aus Datenbits besteht, die für Stromfehler signifikant sind, welche die Gesamtheit der Eingänge und/oder Ausgänge betreffen, wobei dieser aufsteigende Rahmen (T2) in einer anderen Schaltung (21, 32) als der Ausgangsschaltung (14) erstellt wird, und
- mindestens einen Rück-Serienausgang (0') aufweist, der über eine Serienverbindung mit der Ausgangs-Verwaltungseinheit (13) verbunden ist, wobei die Logik (17) so ausgebildet ist, daß sie ausgehend vom aufsteigenden Rahmen (T2) einen aufsteigenden Ausgangsrahmen (T3) erarbeitet, der mindestens ein Stromfehlerbit enthält, und diesen Rahmen zum Rück-Serienausgang (0') leitet.

2. Schaltung nach Anspruch 1, dadurch gekennzeichnet, daß der aufsteigende Ausgangsrahmen (T3) das gleiche Format wie der absteigende Rahmen (T1) besitzt.

3. Schaltung nach Anspruch 1 oder 2, dadurch gekennzeichnet, daß der aufsteigende Eingangsrahmen (T2) das gleiche Format wie der absteigende Rahmen (T1) besitzt.

4. Schaltung nach einem der Ansprüche 1 bis 3, dadurch gekennzeichnet, daß der Ausgangsschaltung (14) Konfigurationsmittel (B1, B18, B19; E/S) für die Betriebsart der Schaltung zugeordnet sind und daß diese Mittel mit der Logik (17) zusammenwirken, um die selektive Übertragung eines aufsteigenden Ausgangsrahmens (T3), der entweder ausgehend vom aufsteigenden Eingangsrahmen (T2) oder vom aufsteigenden Eingangsrahmen (T2) und dem absteigenden Rahmen (T1) erarbeitet wird, zum Rückausgang (0') zu gewährleisten.

5. Schaltung nach einem der Ansprüche 1 bis 3, dadurch gekennzeichnet, daß der Ausgangsschaltung (14) Konfigurationsmittel (B1, B18, B19; E/S) für die Betriebsart der Schaltung zugeordnet sind und daß diese Mittel mit der Logik (17) zusammenwirken, um die selektive Übertragung eines aufsteigenden gemischten Ausgangsrahmens (T3), der ausgehend vom absteigenden Rahmen (T1) und dem aufsteigenden Eingangsrahmen (T2) erarbeitet wird, zum Rückausgang (0') zu gewährleisten.

6. Schaltung nach einem der Ansprüche 1 bis 3, dadurch gekennzeichnet, daß der Ausgangsschaltung (14) Konfigurationsmittel (B1, B18, B19; E/S) für die Betriebsart der Schaltung zugeordnet sind und daß diese Mittel mit der Logik (17) zusammenwirken, um die selektive Übertragung eines aufsteigenden Ausgangsrahmens (T3), der entweder die Bits nur des aufsteigenden Eingangsrahmens (T2) oder die Bits des aufsteigenden Eingangsrahmens (T2) und des absteigenden Rahmens (T1) in Abhängigkeit von der der Ausgangsschaltung (14) bei Empfang des vorhergehenden absteigenden Rahmens mitgeteilten Konfiguration wieder aufnimmt, zum Rückausgang (0') zu gewährleisten.

7. Schaltung nach einem der Ansprüche 1 bis 6, dadurch gekennzeichnet, daß der aufsteigende Ausgangsrahmen (T3) ein Spannungskontrollbit (CU) enthält.

8. Schaltung nach einem der Ansprüche 4 bis 7, dadurch gekennzeichnet, daß die Konfigurationsmittel eines oder mehrere Konfigurationsbits (B1, B18, B19) enthalten, die im absteigenden Rahmen (T1) enthalten sind.

9. Schaltung nach einem der Ansprüche 1 bis 8, dadurch gekennzeichnet, daß der Ausgangsschaltung (14) digital-analoge Konfigurationsmittel (D/A) zugeordnet sind und daß diese Mittel mit der Logik (17) zusammenwirken, um selektiv Klemmen (08-015) der Ausgangsschaltung zu konfigurieren, entweder als Datenausgangskanäle (11) oder als Steuerverbindungen, die zu einer analogen Anwendung gehören.

10. Schaltung nach einem der Ansprüche 1 bis 9, dadurch gekennzeichnet, daß der zweite Serieneingang (I2) der Ausgangsschaltung (14) mit einem Serienausgang (24) einer Eingangsschaltung mit Parallel/Serienwandler (23) verbunden ist, deren parallele Eingänge mit Eingangskanälen (22) verbunden sind und die die aufsteigenden Eingangsrahmen (T2) generiert.

11. Schaltung nach einem der Ansprüche 1 bis 10, dadurch gekennzeichnet, daß die Eingangs-Ausgangs-Verwaltungseinheit (13) Taktsignale (ST, CK) erarbeitet, die je die absteigenden (T1) bzw. die aufsteigenden Rahmen (T2, T3) und die Bits (B1-B20) taktet, die diese Rahmen bilden.

12. Schaltung nach Anspruch 11, dadurch gekennzeichnet, daß die Ausgangs-Verwaltungseinheit (13) mit der Ausgangsschaltung (14) über eine absteigende und eine aufsteigende Serienleitung und zwei Taktsignalleitungen verbunden ist, die mit Isoliermitteln (15) versehen sind.

13. Schaltung nach einem der Ansprüche 1 bis 12, dadurch gekennzeichnet, daß die Ausgangsschaltung (14) mehrere Organe (26, 27, 40, 41) zur Kontrolle der absteigenden Austauschvorgänge aufweist, die so zugeordnet sind, daß sie ein Fehlersignal (D) erzeugen, das einerseits die Übertragung von Daten vom fehlerhaften Rahmen zu den Ausgangskanälen verhindert und andererseits zu einem Zähler (42) übertragen wird, der die Ausgangskanäle auf Null setzt, wenn das Fehlersignal während mehrerer aufeinanderfolgender absteigender Rahmen bestehen bleibt.

14. Schaltung nach Anspruch 13, dadurch gekennzeichnet, daß das Fehlersignal (D) zu einem Organ (25) übertragen wird, das den aufsteigende Ausgangsrahmen (T3) erarbeitet, um diesen zu ändern.

15. Örtliche oder entfernte Ausgangs-Verwaltungsschaltung für ein programmierbares Steuersystem, insbesondere für einen programmierbaren Automaten, das aufweist:
- eine Ausgangs- und ggf. Eingangs-Verwaltungseinheit (13), die mit einer Verarbeitungseinheit verbunden ist, die den Zustand von Ausgangskanälen (11) ausgehend vom Zustand von Eingangskanälen in Abhängigkeit von einem vorher erstellten Programm bestimmen kann, und
- eine Ausgangsschaltung (14), die einen Serien/Parallelwandler (16) aufweist, der einerseits einen Serieneingang, der mit einem Serienausgang der Verwaltungseinheit verbunden ist, und andererseits parallele Ausgänge aufweist, die über Leistungsstufen (18) mit den Ausgangskanälen verbunden sind, wobei die Ausgangsschaltung (14) außerdem eine Steuer- und Kontroll-Logik (17) enthält,
dadurch gekennzeichnet, daß die Ausgangsschaltung (14):
- von der Ausgangs-Verwaltungseinheit (13) an einem ersten Serieneingang (I1) einen absteigenden Rahmen (T1) bestehend aus Datenbits und mindestens einem Kontrollbit empfängt und die Datenbits an die parallelen Ausgänge überträgt,
- an einem zweiten Eingang ein Signal (CU) empfängt, das für die Speisespannung der Vor-Stellglieder repräsentativ ist, die mit den Ausgangskanälen verbunden sind, und
- mindestens einen Rück-Serienausgang (0') aufweist, der über eine Serienverbindung mit der Ausgangs-Verwaltungseinheit (13) verbunden ist, wobei die Logik (17) so ausgebildet ist, daß sie ausgehend vom absteigenden Rahmen (T1) und dem Signal (CU) einen aufsteigenden Ausgangsrahmen (T3) erarbeitet, der mindestens ein Stromfehlerbit enthält, und diesen Rahmen zum Rück-Serienausgang (0') leitet.

## Claims

1. Local or remote output management circuit for a programmable control system, in particular for a programmable automatic controller, comprising :
- an output and if necessary input management unit (13) connected to a processor unit adapted to determine the state of output channels (11) from the state of input channels according to a predetermined program, and
- an output circuit (14) comprising a serial to parallel converter (16) having on the one hand a serial input connected to a serial output of the management unit and, on the other hand, parallel outputs connected via a power stage (18) to respective output channels, the output circuit (14) further comprising control and monitor logic (17),
characterized in that the output circuit (14) :
- receives from the output management unit (13) on a first serial input (I1) a down frame (T1) comprising data bits and at least one control bit, and transmits the data bits to the parallel outputs,
- receives on a second serial input (I2) an up input frame (T2) formed of a succession of bits comprising at least one control bit and data bits indicative of electrical faults concerning all the inputs and/or outputs, this up input frame (T2) being produced in a circuit (21, 32) separate from the output circuit (14), and
- has at least one serial return output (O') connected by a serial link to the output management unit (13), the logic (17) being adapted to produce from the up frame (T2) an up output frame (T3) comprising at least one electrical fault bit and to route this frame to the serial return output (0').

2. Circuit according to claim 1,
characterized in that the up output frame (T3) has the same format as the down frame (T1).

3. Circuit according to claim 1 or 2,
characterized in that the up input frame (T2) has the same format as the down frame (T1).

4. Circuit according to any one of claims 1 through 3,
characterized in that the output circuit (14) is associated with means (B1, B18, B19 ; E/S) for configuring the operating mode of said circuit and said means cooperate with the logic (17) to transmit selectively to the return output (0') an up output frame (T3) which is produced either from the up input frame (T2) or from the up input frame (T2) and the down frame (T1).

5. Circuit according to any one of claims 1 to 3,
characterized in that the output circuit (14) is associated with means (B1, B18, B19 ; E/S) for configuring the operating mode of said circuit and said means cooperate with the logic (17) to transmit selectively to the return output (0') an up combined output frame (T3) produced from the down frame (T1) and the up input frame (T2).

6. Circuit according to any one of claims 1 through 3,
characterized in that the output circuit (14) is associated with means (B1, B18, B19 ; E/S) for configuring the operating mode of said circuit and said means cooperate with the logic (17) to transmit selectively to the return output (0') an up output frame (T3) repeating the bits of the up input frame (T2) only or of the up input frame (T2) and of the down frame (T1) according to the configuration communicated to the output circuit (14) when the previous down frame was received.

7. Circuit according to any one of claims 1 through 6, characterized in that the up output frame (T3) includes a voltage monitoring bit (CU).

8. Circuit according to any one of claims 4 through 7, characterized in that the configuration means comprise one or more configuration bits (B1, B18, B19) included in the down frame (T1).

9. Circuit according to any one of claims 1 through 8, characterized in that the output circuit (14) is associated with digital-analog application configuration means (D/A) and said means cooperate with the logic (17) to configure selectively pins (08-015) of the output circuit either as data output channels (11) or as control connections specific to an analog application.

10. Circuit according to any one of claims 1 through 9, characterized in that the second serial input (I2) of the output circuit (14) is connected to a serial output (24) of an input circuit of a parallel to serial converter (23) parallel inputs of which are connected to input channels (22) and which generates the up input frames (T2).

11. Circuit according to any one of claims 1 through 10, characterized in that the input-output management unit (13) produces clock signals (ST, CK) which respectively time the down frames (T1) and up frames (T2, T3) and the bits (B1-B20) constituting said frames.

12. Circuit according to claim 11,
characterized in that the output management unit (13) is connected to the output circuit (14) via up and down serial lines and two clock signal lines provided with isolating means (15).

13. Circuit according to any one of claims 1 through 12, characterized in that the output circuit (14) comprises a plurality of down communication monitoring units (26, 27, 40, 41) associated together in such a way as to generate an error signal (D) adapted, on the one hand, to disable transfer of data from the defective frame to the output channels and sent, on the other hand, to a counter (42) which resets the output channels if the error signal persists for a plurality of consecutive down frames.

14. Circuit according to claim 13,
characterized in that the error signal (D) is sent to a unit (25) producing the up output frame (T3) in order to modify the latter.

15. A local or remote output managing circuit for a programmable control system, in particular for a programmable automatic controller, comprising :
- an output and if necessary input management unit (13) connected to a processor unit adapted to determine the state of output channels (11) from the state of input channels according to a predetermined program, and
- an output circuit (14) comprising a serial to parallel converter (16) having, on the one hand, a serial input connected to a serial output of the management unit and, on the other hand, parallel outputs connected via a power stage (18) to respective output channels, the output circuit (14) further comprising control and monitor logic (17),
characterized in that the output circuit (14) :
- receives from the output management unit (13) on a first serial input (I1) a down frame (T1) comprising data bits and at least one control bit, and transmits the data bits to the parallel outputs,
- receives at a second input a signal (CU) indicative of the voltage supplied to the pre-actuators connected to the output channels, and
- has at least one serial return output (0') connected by a serial link to the output management unit (13), the logic (17) being conceived for producing, from the down frame (T1) and from said signal (CU), an up output frame (T3) comprising at least an electrical fault bit, and routing said frame to the serial return output (O').
